# EUROPÄISCHE PATENTANMELDUNG

(11) **EP 1 002 491 A1**
(43) Veröffentlichungstag der Anmeldung: **24.05.2000**
(21) Anmeldenummer: 99121460.2
(22) Anmeldetag: 28.10.1999
(51) Int. Cl.: A47J 31/54

(54) **Durchlauferhitzer für ein wassererhitzendes Haushaltsgerät**

(30) Priorität: 17.11.1998 DE 19852883
(71) Anmelder: Braun GmbH, 61476 Kronberg (DE)
(72) Erfinder: Fuchs, Hans-Herbert, 65719 Hofheim (DE); Herz, Volker, 55422 Bacharach (DE); Birk, Andreas, 61350 Bad Homburg (DE)

(57) **Zusammenfassung**

Es wird ein Durchlauferhitzer (19) für Brühgetränkemaschinen oder Wasserkessel beschrieben, der mit einem Wasserrohr (10) mit Zu- und Ablauf (102, 101) an seinen beiden Enden, mit einer entlang des Wasserrohres (10) verlaufenden und mit dem Wasserrohr (10) in Wärmekontakt stehenden elektrischen Heizelement (11) sowie mit einem mit dem Wasserrohr (10) in Wärmekontakt stehenden Temperaturregler (15) versehen ist. Der Temperaturregler (15) ist unmittelbar auf dem Wasserrohr (10) verschweißt und steht so in unmittelbarem Wärmekontakt mit diesem.

## Beschreibung

Die vorliegende Erfindung betriffl einen Durchlauferhitzer für ein wassererhitzendes Haushaltsgerät nach dem Oberbegriff des Patentanspruchs 1.

Ein solcher Durchlauferhitzer ist aus der deutschen Patentschrift DE-39 04 378 C2 bekannt. Solche Durchlauferhitzer sind in Brühgetränkemaschinen mit einem Temperaturregler ausgestattet. Diese Temperaturregler sind einerseits in den elektrischen Heizkreis des Durchlauferhitzers eingeschaltet und stehen andererseits in engem thermischen Kontakt mit dem Durchlauferhitzer. Der Temperaturregler ist bei dieser bekannten Bauweise auf einer besonderen Trägerplatte im zentralen Bereich des U-förmigen Durchlauferhitzers befestigt. Die Trägerplatte ist an das Heizelement und/oder an das Wasserrohr des Durchlauferhitzers angebunden.

Eine andere bekannte Ausführung eines Durchlauferhitzers ist in der deutschen Patentschrift DE-196 13 328 C1 gezeigt. Bei dieser Ausführung ist der Temperaturregler im Bogenbereich des teilkreisförmigen Durchlauferhitzers angeordnet und bildet mit dem Wasserrohr, dem Heizelement, den elektrischen Anschlußverbindungen und dem Netzschalter eine baulich selbsttragende Einheit. Dazu ist der Temperaturregler auf einer Trägerplatte befestigt, die ihrerseits auf dem Wasserrohr fest angebracht ist, und die in den Kreisbogen des U-förmig verlaufenden Durchlauferhitzers hineinragt.

Wie man erkennt, erfordern beide bekannten Lösungen besondere Trägerelemente für den Temperaturregler mit den daraus resultierenden fertigungstechnischen und funktionalen Nachteilen.

Aufgabe der Erfindung ist es daher, einen Durchlauferhitzer für Brühgetränkemaschinen, wie Kaffee- oder Teemaschinen oder Wasserkocher, zu schaffen, der möglichst einfach und betriebssicher aufgebaut ist.

Diese Aufgabe wird bei einem Durchlauferhitzer der eingangs genannten Art durch die im kennzeichnenden Teil des Patentanspruchs 1 enthaltenen Merkmale gelöst.

Fertigungstechnisch entfällt die separate Trägerplatte und es entfallen die Befestigungselemente, mit denen der Temperaturregler auf der Trägerplatte befestigt werden müßte. Funktional ist der Wärmeübergang vom Durchlauferhitzer zum Temperaturregler direkter und thermodynamisch weniger träge. Ebenfalls wird die Sicherheit dadurch erhöht, daß die bei bekannten Lösungen verwendeten Verschraubungen oder Nietverbindungen zur Befestigung des Temperaturreglers auf der besonderen Trägerplatte entfallen; das Risiko, daß sich diese Verbindungen lockern, entfällt damit gleichermaßen.

Entsprechend den fertigungstechnischen Erfordernissen ist es vorteilhaft, wenn der Temperaturregler gemäß dem Anspruch 2 mittels einer Schweißverbindung auf dem Wasserrohr befestigt ist. Hierbei entfällt die im Stand der Technik an den beiden angrenzenden Oberflächen von Thermoregler und Durchlauferhitzer auftretende Oxydation, die einen verschlechterten Wärmeübergang zum Thermoregler hervorruft.

Dementsprechend entfallen auch bei beengten Platzverhältnissen Fertigungsprobleme, wenn die Schweißverbindung gemäß Anspruch 3 eine Laserschweißverbindung ist.

Um bei einem Durchlauferhitzer die Taktzeit des Thermoreglers zu vergrößern, so läßt sich diese Forderung dadurch erfüllen, daß gemäß Anspruch 4 der Temperaturregler direkt auf das Wasserrohr aufgelötet ist. Hierbei wird mehr die Temperatur beim Trockenlaufen des Wasserrohrs kontrolliert, um dann rechtzeitig die Heizung abzuschalten.

Es ist denkbar, daß beim Herstellen der Verbindung von Heizelement und Wasserrohr die vorgesehene Kontaktfläche nicht vollkommen eben ist. Abhilfe für ein solches mögliches Problem ist gemäß Anspruch 5 dadurch gegeben, daß die Auflagefläche des Temperaturreglers auf dem Wasserrohr im Bereich der vorgesehenen Verbindung vorgeprägt ist. Durch die dabei entstehende vollflächige Verbindung wird ein besonders guter Wärmeübergang zum Thermoregler erreicht, was das Ansprechverhalten und die Temperaturregelung des Durchlauferhitzers verbessert.

Weiterhin vorteilhaft unter dem Aspekt der Fertigungstechnik ist es, den Temperaturregler gemäß Anspruch 6 mit seitlichen, in Längsrichtung des Wasserrohres weisenden Befestigungslaschen zu versehen, die nur mit dem Wasserrohr verschweißt, thermisch verklebt oder verlötet werden. Dabei können Beschädigungen am Thermoregler beim Verbindungsvorgang vermieden werden. Durch die Merkmale des Anspruchs 7 wird ohne weiteren Arbeitsgang während der Formgebung des Wasserrohrs die Auflagefläche gleich mit ausgeformt

Weitere Einzelheiten und Merkmale der Erfindung ergeben sich aus der anschließenden Beschreibung der Erfindung anhand der Zeichnung. In der Zeichnung zeigt:
- Fig. 1: ein Heizmodul eines wassererhitzenden Haushaltsgeräts in perspektivischer Ansicht von unten her und;
- Fig. 2: eine perspektivische Ausschnittsdarstellung im Bereich des Temperaturreglers gemäß Fig. 1 in vergrößertem Maßstab.

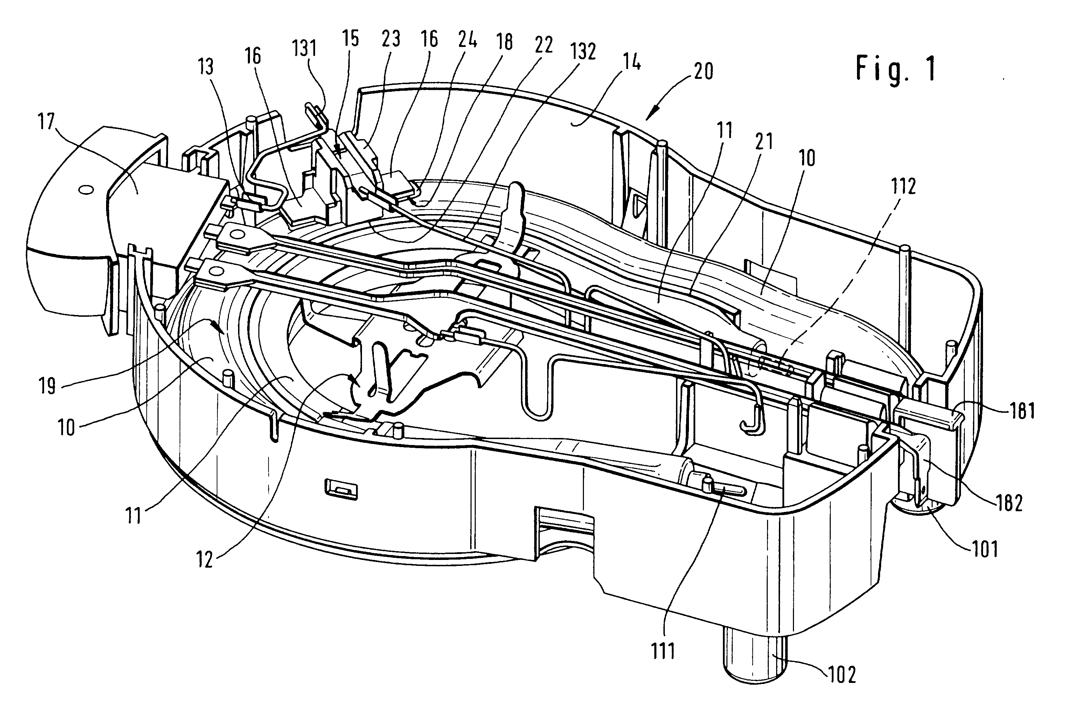

Bei dem in Fig. 1 gezeigten Heizmodul 20 einer Kaffee- oder Teemaschine (nicht dargestellt) ist ein als Sockel des Geräts ausgebildetes Bodenteil 14 aus einem Isoliermaterial, vorzugsweise aus temperaturbeständigem Kunststoff, vorgesehen. In dieses Bodenteil 14 ist der Durchlauferhitzer 19 mit einem Wasserrohr 10, einem Heizelement 11, einem Temperaturregler 15, einem Netzschalter 17, elektrischen Zuleitungen 181 und 182 eingebettet und mittels eines Federelementes 12 verankert.

Das Wasserrohr 10 und das Heizelement 11 sind üblicherweise zum Zwecke eines guten Wärmekontaktes miteinander über die Schweißnaht 21 verschweißt und haben im gezeigten Ausführungsbeispiel eine U-förmige Ausgestaltung. Ein- und Auslauf des Wasserrohrs 10 sind mit den Bezugszeichen 102 und 101 bezeichnet; vom Heizelement 11 erkennt man die elektrischen Anschlußstutzen 111 und 112. An dieser Stelle sei noch erwähnt, daß die genauere Beschreibung dieses Heizmoduls in der am gleichen Tag ebenfalls von der Anmelderin eingereichten deutschen Patentanmeldung wiederzufinden ist, die das interne Aktenzeichen 06312 trägt. Zur Vermeidung von Wiederholungen wird hierauf voll Bezug genommen und soll auch Gegenstand dieser Anmeldung sein.

Unmittelbar auf den Durchlauferhitzer 19, in diesem Ausführungsbeispiel direkt auf das Wasserrohr 10, ist der Temperaturregler 15 aufgesetzt. Der Temperaturregler 15 ist über seine elektrischen Anschlüsse 131 und 132 in den Heizstromkreis eingeschaltet.

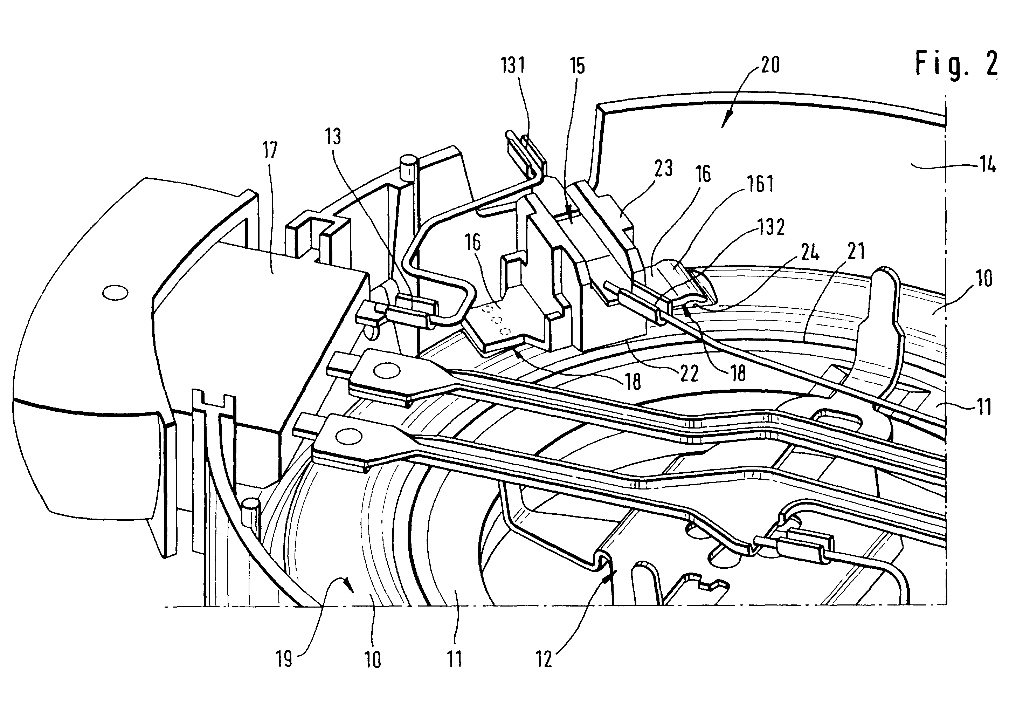

Die Darstellung in Fig. 1, besonders aber jene gemäß Fig. 2 macht die einfache, stabile und funktional vorteilhafte Aufbringung des Temperaturreglers 15 auf dem Wasserrohr 10 deutlich. Insbesondere erlaubt es diese stabile Befestigung, auch den Netzschalter 17, mechanisch sicher über eine elektrische Verbindung 13 am Durchlauferhitzer vormontiert zu halten.

Der Temperaturregler 15 gemäß dem Ausführungsbeispiel ist mit einer Bodenplatte 22 versehen, die sich seitlich in zwei Befestigungslaschen 16 fortsetzt. Seitlich ist hier so zu verstehen, daß die Befestigungslaschen 16 in Richtung des Wasserrohres 10 weisen und so zum Festschweißen leicht erreichbar sind. Die Bodenplatte 22 hält das aus Keramik bestehende Gehäuse 23 des Temperaturreglers 15.

Durch das Bezugszeichen 161 ist in Fig. 2 angedeutet, daß die Befestigungslaschen 16 vorgeprägt sein können. Der Grund für eine solche Vorprägung quer zur Richtung des Wasserrohrs 10 ist darin zu sehen, daß beim Herstellen der Wasserrohr-Heizelement-Verbindung 21 Schweißspritzer auf der Oberfläche des Wasserrohrs 10 festsitzen können, die Unebenheiten an der Verbindungsstelle Temperaturregler-Wasserrohr darstellen. Durch die Vorprägung 161 in der Größenordnung der Abmessungen der vermuteten Schweißspritzer wird eine sichere Kontaktierung bei der Schweißbefestigung des Temperaturreglers 15 auf dem Wasserrohr 10 sichergestellt. Dementsprechend muß auch die Auflagefläche 24 für den Temperaturregler 15 auf dem Wasserrohr 10 vorgeprägt sein, damit beide Teile bündig und flächendeckend aneinanderliegen.

Es ist ersichtlich, daß die Anordnung des Temperaturreglers 15 auch gewünschtenfalls anstelle der Schweißverbindung eine Befestigung mittels einer flächigen Lötverbindung oder einer Klebeverbindung erlaubt. Bei der Schweißverbindung kann großflächig punktgeschweißt oder von der Seite her am Übergang von den Befestigungslaschen 16 zum Wasserrohr 10 längsgeschweißt werden. Als Schweißart kann Laserschweißen und autogenes Schweißen mit oder ohne Schutzgas oder Zusatzwerkstoffen oder sonstige bekannte Verfahren verwendet werden.

Die gute Erreichbarkeit der Anlagefläche 24 in Verbindung mit den Befestigungslaschen 16 erlauben eine problemlose Anwendung des Schweißvorgangs. Bei praktischen Versuchen hat es sich herausgestellt, daß die Verwendung der beiden Befestigungslaschen 16 mit Schweißverbindungen das dynamische Verhalten der Anordnung verbessert.

## Patentansprüche

1. Durchlauferhitzer (19) für Brühgetränkemaschinen, wie Kaffee-, Teemaschinen oder Wasserkocher, mit einem Wasserrohr (10) mit Zu- und Ablauf an seinen beiden Enden, mit einer entlang des Wasserrohres (10) verlaufenden und mit dem Wasserrohr (10) in Wärmekontakt stehenden elektrischen Heizelement (11) sowie mit einem mit dem Wasserrohr (10) in Wärmekontakt stehenden Temperaturregler (15),
**dadurch gekennzeichnet**,
daß der Temperaturregler (15) unmittelbar auf dem Wasserrohr (10) befestigt ist und in unmittelbarem Wärmekontakt mit diesem steht.

2. Durchlauferhitzer nach Anspruch 1,
**dadurch gekennzeichnet**,
daß der Temperaturregler (15) mittels einer Schweißverbindung (18) auf dem Wasserrohr (10) befestigt ist.

3. Durchlauferhitzer nach Anspruch 2,
**dadurch gekennzeichnet**,
daß die Schweißverbindung (18) eine Laserschweißverbindung ist.

4. Durchlauferhitzer nach Anspruch 1,
**dadurch gekennzeichnet**,
daß der Temperaturregler (15) direkt auf das Wasserrohr (10) aufgelötet ist.

5. Durchlauferhitzer nach einem der vorstehenden Ansprüche,
**dadurch gekennzeichnet,**
daß die Auflagefläche (24) für den Temperaturregler (15) auf dem Wasserrohr (10) vorgeprägt ist.

6. Durchlauferhitzer nach einem der vorstehenden Ansprüche,
**dadurch gekennzeichnet**,
daß der Temperaturregler (15) mit mindestens einer seitlichen, in Richtung des Wasserrohrs (10) weisenden Befestigungslasche (16) versehen ist und daß die Befestigungslaschen (16) mit dem Wasserrohr (10) verschweißt, verlötet oder verklebt werden.

7. Durchlauferhitzer nach Anspruch 6,
**dadurch gekennzeichnet,**
daß die Auflagefläche der Befestigungslasche (16) vorgeprägt ist.
